# EUROPÄISCHE PATENTANMELDUNG

(11) **EP 4 231 491 A1**
(43) Veröffentlichungstag der Anmeldung: **23.08.2023**
(21) Anmeldenummer: 23157378.3
(22) Anmeldetag: 17.02.2023
(51) Int. Cl.: H02J 7/00, H02J 3/28

(54) **ÜBERWACHUNGSSYSTEM FÜR ENERGIESPEICHER**

(30) Priorität: 18.02.2022 DE 102022103959; 26.07.2022 DE 102022118753; 13.09.2022 DE 102022123385
(71) Anmelder: M&P Motion Control and Power Electronics GmbH, 01257 Dresden (DE)
(72) Erfinder: Peppel, Torsten, 01257 Dresden (DE)
(74) Vertreter: Schied, Sebastian

(57) **Zusammenfassung**

Die Aufgabe der Erfindung ist es daher, ein System zur Überwachung eines Energiespeichers mit einer Umgehungslösung fehlerhafter Komponenten des Energiespeichers zu schaffen.
1. Überwachungssystem eines Energiespeichers, wobei der Energiespeicher zumindest ein Energiespeichermodul (1) mit in Serie geschalteten Energiespeicherzellen umfasst, wobei das zumindest eine Energiespeichermodul (1) eine Modulüberwachungseinheit (MMU) umfasst und das zumindest eine Energiespeichermodule (1) in einem Rack (2) anordbar ist oder das ein, zwei oder mehr Energiespeichermodule (1) zumindest ein Rack (2) bilden, wobei zumindest zwei oder mehr der Energiespeichermodule (1) in einem oder als Rack (2) in Serie geschalten sind und wobei das zumindest eine Rack (2) eine Racküberwachungseinheit (MCU) umfasst und die Modulüberwachungseinheit (MMU) des jeweiligen Energiespeichermoduls (1) mit der Racküberwachungseinheit (MCU) des zumindest einen Racks (1) verbunden ist und die Racküberwachungseinheit (MCU) mit einer Strangüberwachungseinheit (PCU) verbindbar oder verbunden ist und die Strangüberwachungseinheit (PCU) mit der Zentralüberwachungseinheit (CCU) verbunden ist oder dass die Racküberwachungseinheit (MCU) direkt mit einer Zentralüberwachungseinheit (CCU) verbindbar oder verbunden ist,
dadurch gekennzeichnet,
dass jeweils eines der Energiespeichermodule (1) eine Modulentladungseinheit (ME) oder eine Vielzahl von Energiespeichermodulen (1) gemeinsam eine Modulentladungseinheit (ME) oder die Energiespeichermodule (1) eines Racks gemeinsam eine Modulentladungseinheit (ME) als Rackentladungseinheit (RE) aufweist, wobei die jeweilige Modulentladungseinheit (ME) oder die Rackentladungseinheit (RE) mit der Racküberwachungseinheit (MCU) des Racks (2) oder einer weiteren Racküberwachungseinheit (MCUn) verbunden ist.

## Beschreibung

Die Erfindung betrifft ein Überwachungssystem für Energiespeicher im Mittelspannungsbereich, basierend auf Kondensatoren, vorzugsweise Doppellagenkondensatoren, oder auf aufladbaren Batterien.

Für Energiespeicher werden in zumindest einem Strang Energiespeichermodule in Serie geschaltet, wobei jeweils ein Energiespeichermodul eine Anzahl in Serie geschalteter Energiespeicherzellen, beispielsweise in Form von Einzelzellen umfasst, wobei diese beispielsweise Doppelschichtkondensator oder Lithium-Ion-Batterien sein können , umfasst. Je nach eingesetzten Energiespeicherzellen liegt die Zellspannung beispielsweise bei 2,5V bis 3V.

Die Energiespeichermodule lassen sich in Serie zu zumindest einem Strang oder beispielsweise in zumindest einem Rack zu zumindest einen Strang anordnen oder zusammenschalten. Ebenso lassen sich mehrere Racks in Serie zu zumindest einem Strang kombinieren oder zusammenschalten.

Ebenso oder zusätzlich ist eine parallele Kombination von Strängen oder Racks oder rackübergreifend oder strangübergreifend eine parallele Kombination von Energiespeichermodulen oder eine parallele Kombination von Gruppen von Energiespeichermodulen vorgesehen.

Ein Energiespeicher je nach Ausbaustufe umfassen als kleinste Einheit oder Speichereinheit zumindest ein Energiespeichermodul und/oder zumindest ein Rack mit zumindest einem Energiespeichermodul. Mehrere Energiespeichermodule können zu einer Überwachungseinheit, bspw. einem Rack zusammengefasst sein. Ein Rack kann eine physische Einheit, beispielsweise ein Schrank sein. Ebenso können die Energiespeichermodule auch ohne Rack gekoppelt oder zusammengefasst sein.

Im Niederspannungsbereich werden in Serie geschaltete Energiespeicherzellen über ein Monitoringsystem überwacht. Das Monitoringsystem umfasst unterschiedliche Überwachungskomponenten. Je Energiespeichermodul ist eine Modulüberwachungseinheit vorhanden. Die Modulüberwachungseinheit überwacht jede einzelne Energiespeicherzelle oder Gruppen von oder einer Vielzahl von Energiespeicherzellen des Energiespeichermodul zumindest hinsichtlich der Spannung und die Temperatur zumindest des Energiespeichermoduls. Eine Gruppe von Energiespeicherzellen kann auch alle Energiespeicherzellen eines Energiespeichermoduls umfassen.

Die Modulüberwachungseinheiten können miteinander oder untereinander verbunden sein. Vorzugsweise sind die Modulüberwachungseinheiten über einen Datenbus miteinander verbunden.

Weiterhin ist je Rack mit zumindest einem Energiespeichermodul zumindest eine Racküberwachungseinheit vorhanden.

Die Modulüberwachungseinheiten sind mit der zumindest einen Racküberwachungseinheit verbunden. Mit dem die Modulüberwachungseinheiten verbindenden Datenbus ist die Racküberwachungseinheit ebenfalls verbunden. Somit können zuverlässig und schnell alle Meldungen oder Warnungen an die Racküberwachungseinheit und weiter an die Strangüberwachungseinheit und die Zentralüberwachungseinheit übertragen werden. Zudem können über den Datenbus individuelle oder konkrete Abfragen zu Parametern oder Zuständen erfolgen.

Mehrere Racks können zu einem Strang zusammengefasst werden. Ebenso können mehrere Energiespeichermodule zu einem Strang zusammengefasst werden. Der jeweilige Strang wird wiederum von zumindest einer Strangüberwachungseinheit überwacht.

Die Racküberwachungseinheit oder bei mehreren Racks die jeweiligen Racküberwachungseinheiten sind mit der zumindest einen Strangüberwachungseinheit verbindbar. Mehrere Racküberwachungseinheiten lassen sich an einer der Strangüberwachungseinheiten zusammenfassen. Beispielsweise können 35 Racks mit den jeweiligen Racküberwachungseinheiten an einer der Strangüberwachungseinheiten zugeordnet sein.

Die zumindest eine Strangüberwachungseinheit ist mit zumindest einer Zentralüberwachungseinheit verbunden oder verbindbar.

Es ist jedoch auch vorgesehen, dass die jeweiligen Racküberwachungseinheiten direkt mit der zumindest einen Zentralüberwachungseinheit verbindbar oder verbunden sind. Mehrere Racküberwachungseinheiten können an der Zentralüberwachungseinheit zusammengefasst werden.

Somit bilden, sofern jeweils vorhanden, zumindest die jeweilige Modulüberwachungseinheit, die jeweilige Racküberwachungseinheit und die jeweilige Strangüberwachungseinheit sowie die zumindest eine Zentralüberwachungseinheit das Monitorsystem oder Komponenten des Monitorsystems.

Bei von zumindest einer der jeweiligen Überwachungseinheiten festgestellten Fehlern kann einfach abgeschaltet werden und es ist möglich mit Redundanzen, beispielsweise mit zumindest eines alternativen Stranges oder Racks oder Energiespeichermoduls, zu arbeiten. Dafür werden zusätzliche Speichereinheiten installiert.

Im Mittelspannungsbereich ist der Zugang zu dem System im geladenen Zustand jedoch nicht mehr möglich. Jeder Fehler der Überwachung ist als Abschaltgrund zu werten, da der Zustand des Energiespeichers nicht mehr bekannt ist. Ein Zuschalten oder Abschalten von Redundanzen ist damit in den meisten Fällen nicht wirtschaftlich möglich.

Für den Mittelspannungsbereich werden bei den gegebenen Zellspannungen eine sehr hohe Anzahl an Energiespeicherzellen benötigt. Dementsprechend ergibt sich ebenso eine Vielzahl an Energiespeichermodulen und an Racks mit ihren jeweiligen Überwachungseinheiten. Durch die hohe Anzahl der Einzelkomponenten ist ein solcher Mittelspannungsspeicher sehr unzuverlässig, da bedingt durch die Vielzahl an Komponenten die Ausfallrate hoch ist.

Fehlersituationen können beispielsweise vorliegen, wenn eine Zelle hochohmig wird und der Stromfluss durch den Strang unterbrochen ist. Es kann weder geladen oder entladen werden. Wird versucht den Energiespeicher zu entladen verschieben sich nur die Potentiale der beiden getrennten Speicherteile; wird die Spannungsdifferenz über der Trennstelle zu hoch kommt es zum Durchschlag. Im folgendem kann sich ein leitender Kanal ausbilden, es wäre aber auch möglich, dass der Kondensator öffnet. Der Speicher muss in einer solchen Situation heruntergefahren werden. Wie beschrieben verschieben sich die Potentiale an der Trennstelle, da die Teilpotentiale nicht entladen werden, die Gesamtspannung aber durch das Entladen geringer wird. An der Fehlerstelle werden dann während des Entladens laufend Durchschläge erfolgen oder es bildet sich ein leitfähiger Kanal. Die Energie des gesamten Strangs muss durch die Fehlerstelle fließen. Dadurch erhöht sich die Brandgefahr.

Die Aufgabe der Erfindung ist es daher, ein System zur Überwachung eines Energiespeichers zu schaffen.

Mit der Erfindung wird im angegebenen Anwendungsfall erreicht, dass ein Überwachungssystem eines Energiespeichers geschaffen wird, wobei der Energiespeicher zumindest ein Energiespeichermodul mit in Serie geschalteten Energiespeicherzellen umfasst, wobei das zumindest eine Energiespeichermodul eine Modulüberwachungseinheit umfasst. Die jeweilige Modulüberwachungseinheit ist parallel zu einem Spannungsabgriff am oder innerhalb des Energiespeichermoduls geschalten. Die Versorgung jeweiligen Modulüberwachungseinheiten mit der notwendigen Betriebsspannung kann über den Spannungsabgriff am oder innerhalb des Energiespeichermoduls als Netzteil oder Netzteilkomponente oder über ein Netzteil vorgesehen sein. Das zumindest eine Energiespeichermodul ist in einem Rack anordbar. Ebenso lässt sich in zumindest einem Rack zumindest ein Energiespeichermodul anordnen oder es bilden ein, zwei oder mehr Energiespeichermodule zumindest ein Rack. Zumindest zwei oder mehr der Energiespeichermodule sind in einem oder als Rack in Serie geschalten. Das zumindest eine Rack umfasst eine Racküberwachungseinheit. Die Modulüberwachungseinheit des jeweiligen Energiespeichermoduls ist mit der Racküberwachungseinheit des zumindest einen Racks verbunden und die Racküberwachungseinheit ist mit einer Strangüberwachungseinheit verbindbar oder verbunden. Die Strangüberwachungseinheit ist mit einer Zentralüberwachungseinheit verbunden.

Alternativ oder zusätzlich ist beispielsweise je nach Ausbaustufe die Racküberwachungseinheit direkt mit der Zentralüberwachungseinheit verbindbar oder verbunden.

Erfindungsgemäß ist vorgesehen, dass jeweils eines der Energiespeichermodule oder eine Gruppe von Energiespeichermodulen eine oder eine zugeordnete Modulentladungseinheit zur zusätzlichen Überwachung aufweist. Alternativ oder zusätzlich weist eine Vielzahl von Energiespeichermodulen oder eine Gruppe von Energiespeichermodulen eine gemeinsame Modulentladungseinheit zur zusätzlichen Überwachung auf. Die jeweilige Modulentladungseinheit ist mit der Racküberwachungseinheit des Racks oder einer weiteren Racküberwachungseinheit verbunden.

Somit wird mit der Modulentladungseinheit für eine erhöhte oder verbesserte Verfügbarkeit und Zuverlässigkeit des Energiespeichers eine zusätzliche Überwachung geschaffen, welche wesentliche Parameter des Energiespeichermoduls, wie die Spannung U_{M} des jeweiligen Energiespeichermoduls zu erfassen in der Lage ist, so dass ein Weiterbetrieb des jeweiligen Energiespeichermoduls trotz Ausfall der Modulüberwachungseinheit oder deren Energieversorgung ermöglicht wird.

Vorteilhaft ist das der jeweiligen Modulüberwachungseinheit zugeordnete Energiespeichermodul parallel zu einem Spannungsabgriff am oder innerhalb des Energiespeichermoduls als Netzteil oder eine Netzteilkomponente dieser jeweiligen Modulüberwachungseinheit zugeordnet, so dass sich neben der Erfassung der wesentlichen Parameter des Energiespeichermoduls zugleich die Modulüberwachungseinheit mit Energie versorgen lässt.

Alternativ zur Energieversorgung der Modulüberwachungseinheiten parallel zu einem Spannungsabgriff am oder innerhalb des Energiespeichermoduls kann ein Netzteil oder eine Netzteilkomponente vorgesehen sein, welches auf Rackebene parallel über den Spannungsabgriff über alle Energiespeichermodule eines Racks geschalten ist und die jeweiligen Modulüberwachungseinheiten aller Energiespeichermodule des Racks mit Energie versorgt.

Weiterhin kann es alternativ vorgesehen sein, dass den jeweiligen Modulüberwachungseinheiten der Vielzahl von Energiespeichermodulen ein parallel zu einem Spannungsabgriff der Vielzahl der Energiespeichermodule geschaltetes gemeinsames Netzteil oder eine gemeinsame Netzteilkomponente zugeordnet ist und die jeweiligen Modulüberwachungseinheiten der Vielzahl oder die Gruppe der Energiespeichermodule mit Energie versorgt.

Das jeweilige Netzteil oder die jeweilige Netzteilkomponente bildet eine bekannte oder stabile Last parallel zum jeweiligen Energiespeichermodul oder zu den jeweiligen Energiespeichermodulen, bei deren Wegfall oder bei einer Fehlfunktion die jeweilige Spannung U_{M} eines Energiespeichermodules oder eine Vielzahl von Energiespeichermodulen oder die Spannung U_{R} über alle Energiespeichermodule eines Racks in den Überspannungsbereich kommen würde. Dies erkennt wie dargestellt die Modulentladungseinheit oder Rackentladungseinheit und schaltet die enthaltene zuschaltbare Last.

Alternativ oder zusätzlich können auch alle Energiespeichermodule eines Racks gemeinsam eine Modulentladungseinheit als Rackentladungseinheit aufweisen, so dass in einem Rack für alle Energiespeichermodule eine Rackentladungseinheit vorhanden ist. Die Rackentladungseinheit ist mit der Racküberwachungseinheit des Racks oder einer weiteren Racküberwachungseinheit oder einer Racküberwachungseinheit eines anderen Racks verbunden.

Die in einem Rack untergebrachten Energiespeichermodule können bei Einsatz einer Rackentladungseinheit auch als ein Energiespeichermodul betrachtet oder zu einem Energiespeichermodul zusammengefasst sein.

Die Rackentladungseinheit ist parallel zum Spannungsabgriff über alle Energiespeichermodule geschalten, so dass neben der vereinfachten oder zusammengefassten Erfassung der wesentlichen Parameter der Energiespeichermodule, wie die Spannung U_{R} eines Racks zugleich die Rackentladungseinheit mit Energie versorgt wird.

Bei Einsatz des Netzteils zur Energieversorgung der Modulüberwachungseinheiten. welches auf Rackebene parallel über den Spannungsabgriff über alle Energiespeichermodule eines Racks geschalten ist, wäre beispielsweise die Modulentladungseinheit als Rackentladungseinheit entsprechend parallel über den Spannungsabgriff über alle Energiespeichermodule des Racks und auch parallel zum Netzteil oder zur Netzteilkomponente geschalten.

Zusätzlich kann mit der Modulentladungseinheit auch die Modulüberwachungseinheit überwacht werden, wenn beispielsweise Modulüberwachungseinheit zwar dem Anschein nach funktioniert jedoch keine Fehler ausgibt oder Fehler ausgibt die sich von der Modulentladungseinheit nicht bestätigen lassen.

Entsprechend kann die Rackentladungseinheit die Modulüberwachungseinheiten der Energiespeichermodule das Verhalten aller Energiespeichermodule eines Racks überwachen. So lässt sich bei einem Fehlverhalten bzw. ein Fehler im Rack, der durch die Rackentladungseinheit festgestellt wird, ein Fehler ausgeben, der von einer Modulüberwachungseinheit gegebenenfalls nicht erkannt wurde oder wird.

Somit wird mit den Modulentladungseinheiten oder mit der Rackentladungseinheit für eine erhöhte oder verbesserte Verfügbarkeit und Zuverlässigkeit des Energiespeichers eine zusätzliche Überwachung der Modulüberwachungseinheiten geschaffen, welche bei deren Ausfall oder Fehlfunktion eine ansteigende Spannung U_{M} je Energiespeichermodul, einer Gruppe von Energiespeichermodulen oder eine ansteigende Spannung U_{R} über alle Energiespeichermodule eines Racks erkennt oder erkennen und durch Schalten von Verbrauchern ein Überladen der Energiespeichermodule verhindert.

Fehlerhafte Überwachungen oder Racks können somit frühzeitig erkannt werden und es können entsprechende Maßnahmen ergriffen werden. So kann ein Kontrollverlust und undefinierte Zustände, die zu einer sofortigen Strangabschaltung führen würden, vermindert oder verhindert werden, so dass ein fehlerhaftes Rack frühzeitig ein Weiterbetrieb des jeweiligen Racks und damit gegebenenfalls des betroffenen Stranges trotz Ausfall oder Fehlfunktion einer Modulüberwachungseinheit oder der Modulüberwachungseinheiten ermöglicht wird.

Wesentliche Parameter sind beispielsweise die Spannung U_{M} des jeweiligen Energiespeichermoduls bzw. die Spannung U_{R} des jeweiligen Racks. Ändert sich im Betrieb die Spannung U_{M} bzw. Spannung U_{R} durch eine fehlerbehaftete oder ausgefallene Modulüberwachungseinheit beispielsweise durch Wegfalls des durch die jeweilige Modulüberwachungseinheit gebildeten Verbrauchers und kommt in den Überspannungsbereich, schaltet die jeweilige Modulentladungseinheit oder Rackentladungseinheit einen bekannten und kontrollierten Verbraucher. Zudem wird ein Fehler ausgelöst. Den bekannten und kontrollierten Verbraucher bildet oder umfasst die Modulentladungseinheit oder die Rackentladungseinheit.

Entsprechend weist die Modulentladungseinheit oder die Rackentladungseinheit eine zuschaltbare Last auf, die vorzugsweise eine ohmsche Last ist, welcher verhindert, dass es zu einer Überladung des Energiespeichermoduls kommt.

Tritt beispielsweise ein Fehler in einem Energiespeichermodul oder an einer Modulüberwachungseinheit oder am Netzteil oder der Netzteilkomponente auf und es wird durch die Modulentladungseinheit oder die Rackentladungseinheit eine zu hohe Modulspannung U_{M} oder Rackspannung U_{R} erkannt und so werden als Last die Widerstände zur Modulentladung an der Modulentladungseinheit oder an der Rackentladungseinheit eingeschaltet.

Während die Modulüberwachungseinheit das Energiespeichermodul überwacht, also die Überwachungsfunktion für eine Modulsicherheit übernimmt, überwachen die Modulentladungseinheit oder Modulentladungseinheiten oder die Rackentladungseinheit die Modulüberwachungseinheit oder Modulüberwachungseinheiten und übernehmen entsprechend die Überwachungsfunktion für eine Sicherheit der Modulüberwachungseinheiten.

Vorteilhaft lassen sich zwei oder mehr Racks in Serie zu einem Strang schalten oder kombinieren. Ebenso lassen sich zumindest zwei Stränge parallel schalten.

Ein Vorteil der Erfindung liegt in der Bereitstellung von Messdaten einer jeden einzelnen Energiespeicherzelle oder einer Vielzahl oder von Gruppen von Energiespeicherzellen bei einer gleichzeitig sehr hohen Zuverlässigkeit des Energiespeichers. Zudem kann auf auftretende Fehler zielgerichtet und mit begrenzten Einfluss reagiert werden und somit die Zuverlässigkeit des Energiespeichers erhöht werden.

Durch die Messdaten kann erkannt werden, wenn ein Modul oder eine Zelle in einem Modul zu schnell altert, beispielsweise durch Fertigungsfehler oder nicht erkanntem Transportschaden, so dass bei einer geplanten Wartung ein gezielter Tausch betroffener Energiespeichermodule geplant werden kann.

Vorteilhafte Ausgestaltungen der Erfindung sind in den Unteransprüchen dargestellt.

In einer Weiterbildung der Erfindung stehen bei zwei oder mehr Modulentladungseinheiten innerhalb des Racks die jeweiligen Modulentladungseinheiten miteinander in Verbindung. So können die Modulentladungseinheiten als Stern oder mit Stichleitungen oder in Serie oder als Ring miteinander verbunden sein, wodurch eine Vereinfachung in der Verschaltung und in der Kopplung sowie eine Erhöhung der Verfügbarkeit bzw. der Zuverlässigkeit erreicht wird. So kommen für die Verbindung beispielsweise an sich bekannte oder proprietäre Daten-Busse sowie binäre Signale oder Lichtwellenleiter (LWL) - Verbindungen in Betracht.

In einer Weiterbildung der Erfindung ist in der Verbindung zwischen den oder mit den jeweiligen Modulentladungseinheiten innerhalb des Racks ein Rackmanager vorgesehen oder verbunden, wobei die Modulentladungseinheiten über den Rackmanager mit der jeweiligen Racküberwachungseinheit verbunden sind. Bei Einsatz eines Datenbusses wäre der Rackmanager in den Daten-Bus integriert. Der Rackmanager fasst eine Vielzahl von Modulentladungseinheiten zusammen und/oder überwacht sie. Damit überwacht der Rackmanager auch einen Teil oder Abschnitt des Stranges, in welchem das jeweilige Rack angeordnet oder eingebunden ist. Der Rackmanager erlaubt die Sammlung und Zuordnung auftretender durch die jeweilige Modulentladungseinheit erfassten Fehlfunktionen oder Meldungen des Energiespeichermoduls oder der jeweiligen Energiespeichermodule in Bezug auf das jeweilige Rack. Mit dem Rackmanager können die Meldungen gebündelt und/oder priorisiert an die Racküberwachungseinheit weitergegeben werden. So lassen sich vereinfacht Rückschlüsse, Maßnahmen oder Handlungen ableiten, um die Funktion des Energiespeichermoduls oder der jeweiligen Energiespeichermodule aufrechtzuerhalten.

In einer vorteilhaften Weiterbildung der Erfindung ist die weitere Racküberwachungseinheit eine oder eine weitere Racküberwachungseinheit des gleichen Racks oder die Racküberwachungseinheit eines zweiten oder weiteren Racks, so dass eine Redundanz geschaffen wird, wobei ein Rack beispielsweise zwei Racküberwachungseinheiten aufweist oder die weitere Racküberwachungseinheit in einem anderen Rack vorhanden ist, so dass bei Ausfall einer Racküberwachungseinheit im ersten Rack oder in einem weiteren Rack die Überwachung aufrecht erhalten bleibt und eine Abschaltung wegen eines Überwachungsausfalls verhindert werden kann.

Für ein weiteres oder das weitere Rack, welches je nach Anordnung und Kombination als das letzte Rack eines Stranges bezeichnet werden kann, ist beispielsweise die weitere Racküberwachungseinheit im ersten Rack des Stranges vorhanden, so dass die Modulentladungseinheit mit dieser Racküberwachungseinheit im ersten Rack des Stranges verbunden ist. Es kommen jedoch auch weitere oder andere Anordnungen oder Kombinationen oder Verbindungen der jeweiligen Modulentladungseinheiten zu einer Racküberwachungseinheit in Betracht. So kommen auch strangübergreifende Anordnungen oder Kombinationen oder Verbindungen in Betracht, bei welchem beispielsweise die jeweilige Modulentladungseinheit oder die jeweiligen Modulentladungseinheiten an einer Racküberwachungseinheit eines anderen Stranges angeordnet oder mit einer Racküberwachungseinheit eines anderen Stranges kombiniert oder verbunden sind.

Indem die Racküberwachungseinheit und die Racküberwachungseinheit eines Racks in Verbindung stehen, wird eine zusätzliche Überwachung und ein Abgleich zwischen den Racküberwachungseinheiten erreicht, um Fehlfunktionen der Energiespeichermodule oder Falschmeldungen der Modulüberwachungseinheiten oder Modulentladungseinheiten oder Rackmanager durch ein Gegenprüfen oder einen Vergleich besser und schneller festzustellen oder um auf Ausfälle besser und schneller reagieren zu können.

Indem bei zwei oder mehr in Serie geschaltenen oder kombinierten Racks die Racküberwachungseinheit eines Racks mit der Racküberwachungseinheit des zweiten oder weiteren Racks in Verbindung stehen, wird eine Redundanz und umlaufende Verteilung auf das jeweils benachbarte Rack geschaffen. So kann auch hierbei die Racküberwachungseinheit des weiteren Racks, welches je nach Anordnung und Kombination als das letzte Rack eines Stranges bezeichnet werden kann, mit beispielsweise der Racküberwachungseinheit des ersten Racks des Stranges als weitere Racküberwachungseinheit in Verbindung stehen.

Vorteilhaft können für eine weiterführende Überwachung in einer Zusatzmeldeeinheit weitere Signale vorgesehen, generiert oder Zustände überwacht werden.

Indem die Modulentladungseinheit parallel zu einem Spannungsabgriff des jeweiligen Energiespeichermoduls oder die Modulentladungseinheit parallel zum Spannungsabgriff über die Vielzahl von Energiespeichermodulen geschalten ist, ist auch bei Ausfall zumindest einer der oder der Modulüberwachungseinheiten oder des Netzteils oder Netzteilkomponente eine Last, vorzugsweise eine bekannte oder stabile ohmsche Last parallel zum jeweilige Energiespeichermodul oder parallel zur Vielzahl von Energiespeichermodulen vorhanden oder schaltbar, wodurch eine Überladung des jeweiligen Energiespeichermoduls oder der jeweiligen Energiespeichermodule verhindert werden und/oder eine stete Entladung erfolgen kann.

Zudem kann anhand eines auf der Modulentladungseinheit über der Last messbaren Spannungsabfalls die Gesamtspannung des jeweiligen Energiespeichermoduls oder der Vielzahl der Energiespeichermodule ermittelt und somit auch ein grober Rückschluss auf den Zustand des jeweiligen Energiespeichermoduls getroffen werden.

In einer Weiterbildung ist die Rackentladungseinheit auf Rackebene parallel zum gemeinsamen Spannungsabgriff der Energiespeichermodule eines Racks geschalten, wobei ein Netzteil oder eine Netzteilkomponente auf Rackebene parallel zum Spannungsabgriff über die Energiespeichermodule des Racks geschalten ist, so dass auch bei Ausfall zumindest einer der Modulüberwachungseinheiten oder der Modulüberwachungseinheit oder des Netzteils oder der Netzteilkomponente eine Last, vorzugsweise eine bekannte oder stabile ohmsche Last für das Energiespeichermodul oder die Energiespeichermodule vorhanden oder schaltbar ist.

. Das Netzteil oder die Netzteilkomponente versorgt jedes Energiespeichermodul des Racks mit der notwendigen Betriebsspannung , wodurch zu jedem der Energiespeichermodule eine individuelle Verbindung vorhanden ist. Das Netzteil bildet einen Verbraucher, der eine Überladung der Energiespeichermodule verhindert. Bei Ausfall des Netzteils der Netzteilkomponente fällt die Last weg und es wird durch die Rackentladungseinheit eine Erhöhung der Spannung U_{R} eines Racks über alle Energiespeichermodule erkannt. In diesem Falle wird in der und durch die Rackentladungseinheit eine Last, vorzugsweise eine bekannte oder stabile ohmsche Last, zugeschalten, wodurch ein Teil der Spannung U_{R} eines Racks über die Last in der Rackentladungseinheit abfällt.

Vorteilhaft sind Datenverbindungen innerhalb des Racks zwischen den Energiespeichermodulen und dem Netzteil oder der Netzteilkomponente oder zwischen den Energiespeichermodulen und der Rackentladungseinheit oder nach außerhalb des Racks zwischen der Rackentladungseinheit und der Racküberwachungseinheit beispielsweise über Lichtwellenleiter (LWL) - Verbindungen realisiert.

Alternativ können die Datenverbindungen innerhalb des Racks zwischen den Energiespeichermodulen und dem Netzteil oder der Netzteilkomponente oder zwischen den Energiespeichermodulen und der Rackentladungseinheit mit den drahtgebundenen spannungsführenden Verbindungen kombiniert sein. Hierbei ist vorteilhaft das Netzteil oder die Netzteilkomponente zugleich ein Datenknoten mit einer Verbindung zur Rackentladungseinheit. Die Verbindung von dem Netzteil oder der Netzteilkomponente als Datenknoten zur Rackentladungseinheit ist zugleich eine drahtgebundene spannungsführende Verbindung und eine Datenverbindung.

Unter der Verbindung des Netzteils oder der Netzteilkomponente mit den Energiespeichermodulen wird auch verstanden, dass das Netzteil oder die Netzteilkomponente mit den Modulüberwachungseinheiten der Energiespeichermodule verbunden ist oder verbunden sein kann.

Indem zumindest eines der Energiespeichermodule in einem Rack eine Energiespeichermodulgruppe bildet oder dass zwei oder mehr Energiespeichermodule in einem Rack in eine, zwei oder mehr Energiespeichermodulgruppen je Rack aufteilbar oder zuordbar sind, kann in einem Fehlerfall eine Separierung und gezieltere Zuordnung einzelner oder zusammengefasster Energiespeichermodule erfolgen.

Beispielsweise erfolgt die Bildung der Energiespeichermodulgruppen hälftig je Rack, so dass die Energiespeichermodule in einem Rack beispielsweise in eine erste Energiespeichermodulgruppe im oberen Teil und in eine zweite Energiespeichermodulgruppe im unteren Teil des Racks aufgeteilt oder zugeordnet sind. Vorzugsweise sind die Energiespeichermodulgruppen gleich groß. Andere oder weitere Unterteilungen oder Bildungen von Energiespeichermodulgruppen innerhalb eines Racks mit jeweils unterschiedlicher Anzahl an Energiespeichermodulen sind jedoch auch möglich.. Ebenso kann eine Unterteilung oder Aufteilung der Energiespeichermodule in weitere Energiespeichermodulgruppen erfolgen, so dass die Energiespeichermodule auch in drei, vier oder mehr Energiespeichermodulgruppen je Rack aufteilbar oder zuordbar sind. Ebenso kann ein Energiespeichermodul für sich bereits eine Energiespeichermodulgruppe bilden.

Alternativ oder zusätzlich stehen zumindest die jeweiligen Modulüberwachungseinheiten eines Racks mit dem zumindest einen Netzteil oder der zumindest einen Netzteilkomponente in Verbindung, wobei die jeweiligen Modulüberwachungseinheiten über das zumindest eine Netzteil oder die zumindest eine Netzteilkomponente mit der Racküberwachungseinheit verbunden sind. Hierbei kommen beispielsweise Datenbusse oder Datenverbindungen als Ring oder als Stern- bzw. Stichleitung in Betracht, wodurch ebenfalls die Kommunikation der Modulüberwachungseinheiten untereinander und mit der Racküberwachungseinheit redundant erfolgen kann und somit sich die Verfügbarkeit und Zuverlässigkeit der Überwachung erhöht.

Mehrere Ausführungsbeispiele der Erfindung sind in den Zeichnungen dargestellt und werden im Folgenden näher beschrieben. Es zeigen:

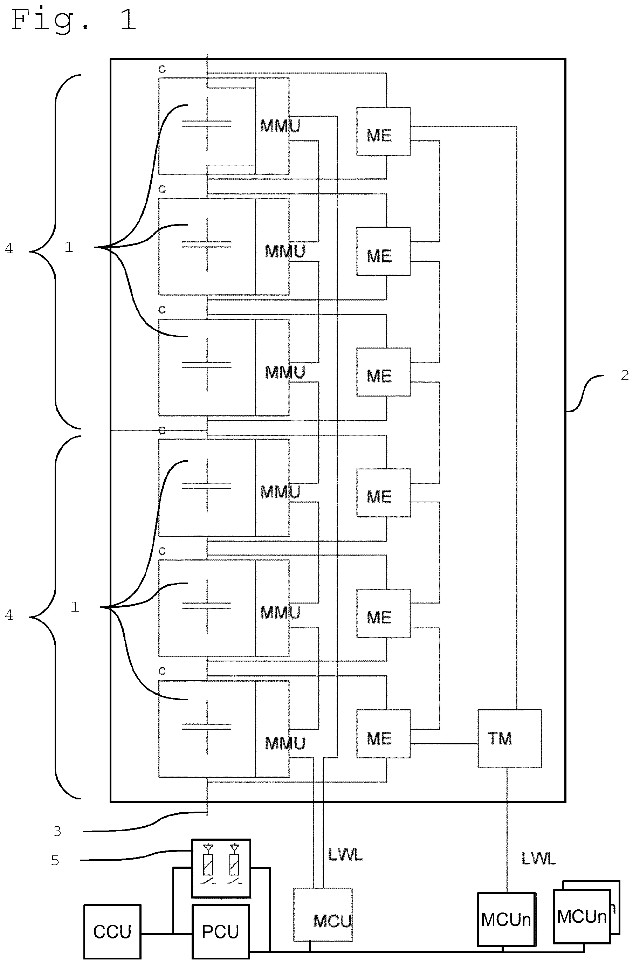

Fig. 1 eine schematische Darstellung des erfindungsgemäßen Überwachungssystems für Energiespeicher mit einem Rack mit Energiespeichermodulen, Modulüberwachungseinheiten, Modulentladungseinheiten, Rackmanager sowie Racküberwachungseinheiten, Strangüberwachungseinheit, Zusatzmeldeeinheit und Zentralüberwachungseinheit,

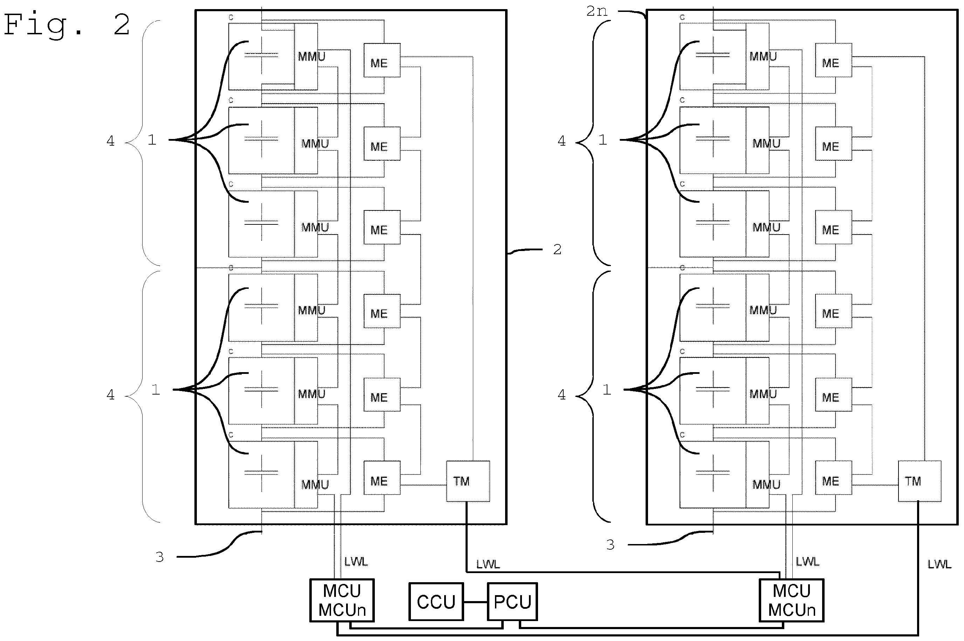

Fig. 2 eine schematische Darstellung des erfindungsgemäßen Überwachungssystems für Energiespeicher mit zwei Racks mit Energiespeichermodulen, Modulüberwachungseinheiten, Modulentladungseinheiten, Rackmanager sowie jeweils einer Racküberwachungseinheit, einer Strangüberwachungseinheit und Zentralüberwachungseinheit und

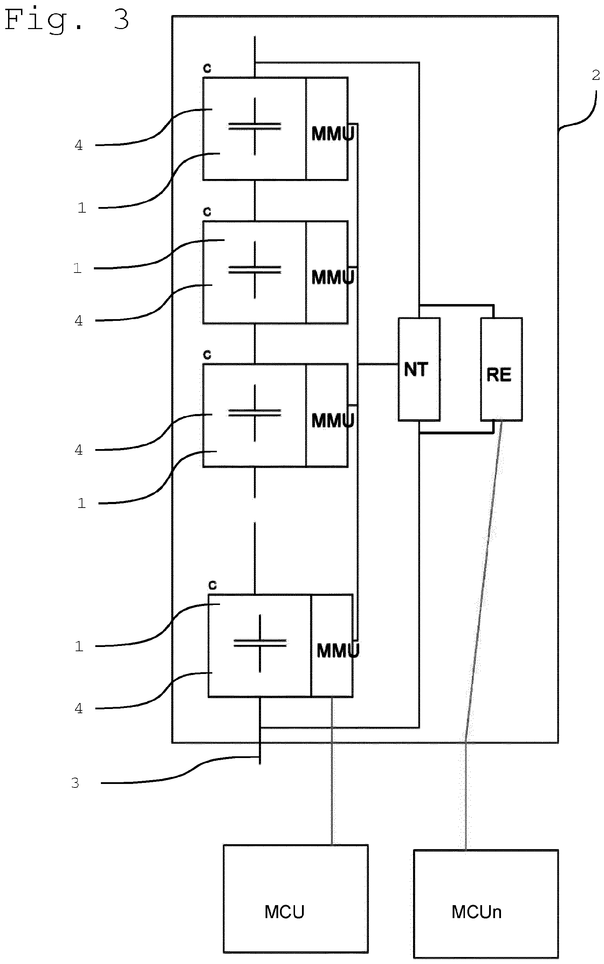

Fig. 3 eine schematische Darstellung des erfindungsgemäßen Überwachungssystems für Energiespeicher mit einem Rack mit Energiespeichermodulen, Modulüberwachungseinheiten, einer Rackentladungseinheit mit einer Netzteilkomponente, wobei die Netzteilkomponente mit jedem Energiespeichermodul mit Racküberwachungseinheit verbunden ist.

Die Figur1 zeigt die schematische Darstellung des erfindungsgemäßen Überwachungssystems für Energiespeicher, wobei im konkreten Beispiel der Energiespeicher sechs Energiespeichermodule 1 mit jeweils 48 in Serie geschalteten Energiespeicherzellen in Form von Kondensatoren umfasst. Jedes der Energiespeichermodule 1 umfasst eine Modulüberwachungseinheit MMU. Die Energiespeichermodule 1 sind in einem Rack 2 angeordnet und sind im Rack 2 in Serie geschalten. Das Rack 2 umfasst eine Racküberwachungseinheit MCU. Die Modulüberwachungseinheiten MMU der Energiespeichermodule 1 sind mit der Racküberwachungseinheit MCU als erste Racküberwachungseinheit MCU des Racks 2 verbunden. Die erste Racküberwachungseinheit MCU ist mit einer Strangüberwachungseinheit PCU verbunden. Die Strangüberwachungseinheit PCU ist mit einer Zentralüberwachungseinheit CCU verbunden. Je nach Ausbaustufe, alternativ oder zusätzlich kann die Racküberwachungseinheit MCU direkt mit der Zentralüberwachungseinheit CCU verbindbar oder verbunden sein. Erfindungsgemäß weist jedes der Energiespeichermodule 1 eine Modulentladungseinheit ME auf.

Es ist jedoch auch vorgesehen, dass eine Vielzahl von Energiespeichermodulen 1 zusammengefasst eine gemeinsame Modulentladungseinheit ME aufweisen. In diesem Fall ist im Rack 2 ein Netzteil NT vorhanden, welches die Vielzahl von Energiespeichermodulen 1 mit der notwendigen Betriebsspannung versorgt. Die gemeinsame Modulentladungseinheit ME und das Netzteil NT sind parallel zum Spannungsabgriff über die als Vielzahl zusammengefassten Energiespeichermodule 1 geschalten.

Die Modulentladungseinheit ME weist zuschaltbare Widerstände auf, die bei einem Fehler und bei drohender Überladung des jeweiligen Energiespeichermoduls 1 zur Modulentladung eingeschaltet werden können. Hierfür überwacht die Modulentladungseinheit ME die Spannung U_{M} des jeweiligen Energiespeichermoduls 1.

Die Modulentladungseinheiten ME sind über einen Rackmanager TM mit einer weiteren Racküberwachungseinheit MCUn als zweite Racküberwachungseinheit MCUn des Racks 2 verbunden.

Die weitere Racküberwachungseinheit MCUn kann hierbei eine Racküberwachungseinheit MCUn des gleichen Racks 2 oder eines zweiten oder weiteren Racks 2n sein.

Die Racküberwachungseinheit MCU und die Racküberwachungseinheit MCUn des Racks 2 sowie die jeweiligen Racküberwachungseinheiten MCU, MCUn weiterer Racks 2n stehen jeweils mit der Strangüberwachungseinheit PCU in Verbindung.

Die jeweiligen Racküberwachungseinheiten MCU, MCUn können jedoch auch untereinander verbunden sein.

Die Modulüberwachungseinheiten MMU und die Modulentladungseinheiten ME speisen sich über die Modulspannung des jeweiligen Energiespeichermoduls 1 parallel zu einem Spannungsabgriff am oder innerhalb des Energiespeichermoduls 1, wobei das Energiespeichermodul 1 als internes Netzteil NT dieser jeweiligen Modulüberwachungseinheit MMU zugeordnet ist und die Modulentladungseinheiten ME ebenso parallel zu einem Spannungsabgriff am Energiespeichermodul 1 angeschlossen ist und die Spannung U_{M} des Energiespeichermoduls 1 und damit die Funktion des internen Netzteils NT überwacht.

Sind eine Vielzahl Energiespeichermodule 1 zusammengefasst werden die Modulüberwachungseinheiten MMU über ein Netzteil NT, welches parallel über den Spannungsabgriff der Vielzahl zusammengefasster Energiespeichermodule 1 geschalten ist, gespeist. In diesem Fall ist nur eine Modulentladungseinheit ME vorhanden, die parallel über den Spannungsabgriff der Vielzahl zusammengefasster Energiespeichermodule 1 geschalten ist. Sind alle Energiespeichermodule 1 eines Racks 2 zusammengefasst sind das Netzteil NT und die Modulentladungseinheit ME als Rackentladungseinheit RE parallel über den Spannungsabgriff der Vielzahl zusammengefasster Energiespeichermodule 1 geschalten.

Neben der Strangüberwachungseinheit PCU ist zudem eine Zusatzmeldeeinheit 5 vorhanden und ist mit der Strangüberwachungseinheit PCU und mit den Racküberwachungseinheiten MCU, MCUn des Racks 2 verbunden. Die Zusatzmeldeeinheit 5 umfasst im konkreten Beispiel zwei Relais, die von den Racküberwachungseinheiten MCU, MCUn angesteuert werden und über Schaltausgänge Meldungen oder Warnungen oder Signalisierungen ausgeben. Die Zusatzmeldeeinheit 5 melden redundant zur MCU Warnungen. Die übergeordnete Zentralüberwachungseinheit CCU kann diese Signale und die Strangüberwachungseinheit PCU auswerten.

Tritt beispielsweise ein Fehler im Energiespeichermodul 1 oder beim auf, wird durch die Modulentladungseinheit ME die zu hohe Modulspannung erkannt und die Widerstände zur Modulentladung eingeschaltet. Gleichzeitig wird eine Warnung gesetzt. Bei intakter Verbindung von der Modulüberwachungseinheit MMU zur Racküberwachungseinheit MCU wird durch die Racküberwachungseinheit MCU eine Warnung gesetzt die zusammen mit der Warnung der Modulentladungseinheit ME einen Fehler ergibt und es wird über die Strangüberwachungseinheit PCU ebenfalls ein Fehler gemeldet. Ist die Verbindung von der Modulüberwachungseinheit MMU zur Racküberwachungseinheit MCU gestört ist die Warnung der Racküberwachungseinheit MCU ebenfalls gesetzt und zusammen mit der Modulentladungseinheit ME wird ein Fehler generiert.

Abweichend oder ergänzend zu Figur 1 sind in Figur 2 neben einem Rack 2 als erstes Rack 2 ein weiteres Rack 2n als zweites Rack 2n dargestellt. Die Racks bilden beispielsweise einen Strang 3 oder gehören zu unterschiedlichen Strängen 3. Das erste Rack 2 umfasst eine Racküberwachungseinheit MCU. Mit dieser Racküberwachungseinheit MCU sind die Modulüberwachungseinheiten MMU des ersten Racks 2 verbunden. Die jeweiligen Modulentladungseinheiten ME sind über den Rackmanager TM mit einer weiteren Racküberwachungseinheit MCUn verbunden, wobei die weitere Racküberwachungseinheit MCUn die Racküberwachungseinheit MCU des zweiten Racks 2n ist.

Im zweiten Rack 2n sind die Modulüberwachungseinheiten MMU mit der Racküberwachungseinheit MCUn, als Racküberwachungseinheit MCU verbunden. Die jeweiligen Modulentladungseinheiten ME im zweiten Rack sind über den Rackmanager TM mit der Racküberwachungseinheit MCU des ersten Rack 2 als damit weitere Racküberwachungseinheit MCUn verbunden.

Die Racküberwachungseinheiten MCU, MCUn des ersten Racks 2 und des zweiten Rack 2n sind miteinander verbunden. Zudem sind die Racküberwachungseinheiten MCU, MCUn mit einer Strangüberwachungseinheit PCU verbunden ist. Die Strangüberwachungseinheit PCU ist mit der Zentralüberwachungseinheit CCU verbunden. Zusätzlich sind die Racküberwachungseinheiten MCU, MCUn, die Strangüberwachungseinheit PCU und die Zentralüberwachungseinheit CCU mit der Zusatzmeldeeinheit 5 verbunden.

Die Figur 2 zeigt beispielhaft die Verschaltung und die Verbindung von zwei Racks 2, wobei die Anzahl jedoch nicht darauf beschränkt ist. So kann eine Vielzahl von Racks 2, beispielsweise bis zu 35 oder mehr Racks miteinander zu einem Strang 3 mit einer Strangüberwachungseinheit PCU verbunden und verschalten werden. Die Racküberwachungseinheiten MCU, MCUn lassen sich dabei so aufteilen oder verteilen, dass in jedem Rack 2 eine Racküberwachungseinheit MCU, im ersten Rack eine Racküberwachungseinheit MCU, ab dem zweiten Rack 2 jeweils eine weitere Racküberwachungseinheit MCUn vorhanden ist. Während die Modulüberwachungseinheiten MMU mit der Racküberwachungseinheit MCU des eigenen Rack 2 verbunden sind, sind die Modulentladungseinheiten ME dieses Racks 2 über den Rackmanager TM mit der Racküberwachungseinheit MCU als weitere Racküberwachungseinheit MCUn eines weiteren oder benachbarten Rack 2n verbunden. Hierdurch bildet sich eine verteilte oder kaskadierte Überwachung durch die jeweilige Verbindung des Rackmanager TM zu einem weiteren oder benachbarten Rack 2n und dessen Racküberwachungseinheit MCU als weitere Racküberwachungseinheit MCUn.

Vorzugsweise sind die Racküberwachungseinheiten MCU, MCUn miteinander verbunden. Jede der Racküberwachungseinheiten MCU, MCUn ist mit der Strangüberwachungseinheit PCU verbunden.

Die Figuren 1 und 2 zeigen jeweils Racks 2, wobei das jeweilige Rack 2 im konkreten Beispiel sechs Energiespeichermodule 1 mit Energiespeicherzellen umfasst. Wie oben beschrieben, ist je Energiespeichermodul 1 Modulüberwachungseinheit MMU sowie je Energiespeichermodul 1 eine Modulentladungseinheit ME vorhanden.

Die Modulüberwachungseinheiten MMU der Energiespeichermodule 1 sind über einen Datenbus miteinander und mit der Racküberwachungseinheit MCU verbunden.

Die jeweiligen Modulentladungseinheiten ME der Energiespeichermodule 1 sind beispielsweise ebenfalls über einen Datenbus miteinander und mit dem Rackmanager TM verbunden. Jeweils ist eine Modulentladungseinheit ME parallel zum entsprechenden Energiespeichermodul 1 jeweils am Spannungsabgriff des jeweiligen Energiespeichermoduls 1 angeschlossen. Somit kann zusätzlich zur jeweiligen Modulüberwachungseinheit MMU oder auch bei Ausfall der jeweiligen Modulüberwachungseinheit MMU oder des jeweiligen Energiespeichermoduls als Netzteils NT oder Netzteilkomponente NT ein Fehlerfall, beispielsweise ein Überladen des entsprechenden Energiespeichermoduls 1 durch eine Spannungsüberwachung erkannt und gemeldet werden.

Die Modulüberwachungseinheit MMU sind mit der ersten Racküberwachungseinheit MCU und der Rackmanager TM ist mit einer zweiten Racküberwachungseinheit MCUn verbunden. Die Racküberwachungseinheit MCU, MCUn sowie weitere Racküberwachungseinheit MCU, MCUn sind mit der Strangüberwachungseinheit PCU und die Strangüberwachungseinheit PCU ist mit der Zentralüberwachungseinheit CCU verbunden.

Zudem ist in Figur 1 eine Zusatzmeldeeinheit 5 dargestellt, durch welche weitere Signale vorgesehen, generiert oder Zustände überwacht werden.

In diesen Beispielen gemäß Figur 1 und Figur 2 wird der Datenbus zwischen den Modulüberwachungseinheiten MMU und der Strangüberwachungseinheit PCU mittels Lichtwellenleiter realisiert. Ebenso ist die Verbindung zwischen dem Rackmanager TM und der weiteren Strangüberwachungseinheit PCUn über Lichtwellenleiter realisiert. Die Verbindungen für den Datenbus zwischen den Modulentladungseinheiten ME und dem Rackmanager TM sind drahtgebunden realisiert, wobei dafür auch Lichtwellenleiter möglich sind.

Die Figur 3 zeigt eine schematische Darstellung des erfindungsgemäßen Überwachungssystems für Energiespeicher mit einem Rack 2 mit Energiespeichermodulen 1, wobei statt einzelner Modulentladungseinheiten ME je Energiespeichermodul 1 nur eine Rackentladungseinheit RE für alle Energiespeichermodule 1 im Rack 2 vorhanden ist. Die Rackentladungseinheit RE ist ebenso wie das Netzteil NT parallel zum Spannungsabgriff über alle Energiespeichermodule 1 im Rack 2 verbunden. Damit wird eine vereinfachte Überwachung der Energiespeichermodule 1 im Rack 2 ermöglicht, da die Rackentladungseinheit RE die Spannung U_{R} des Racks 2 direkt überwacht und bei Fehlfunktionen des Netzteils NT eine Überspannung über alle Energiespeichermodule 1 im Rack 2 erkennt und entsprechend die eigene Last zuschaltet.

Darüber hinaus umfasst jedes der Energiespeichermodule 1 eine Modulüberwachungseinheit MMU. Weiterhin umfasst das Rack 2 eine Racküberwachungseinheit MCU. Die Modulüberwachungseinheiten MMU der Energiespeichermoduls 1 sind mit der Racküberwachungseinheit MCU als erste Racküberwachungseinheit MCU des Racks 2 verbunden. Zudem ist die erste Racküberwachungseinheit MCU mit einer Strangüberwachungseinheit PCU verbunden (nicht dargestellt). Die Strangüberwachungseinheit PCU ist mit einer Zentralüberwachungseinheit CCU verbunden (nicht dargestellt). Je nach Ausbaustufe, alternativ oder zusätzlich kann die Racküberwachungseinheit MCU direkt mit der Zentralüberwachungseinheit CCU verbindbar oder verbunden sein (nicht dargestellt). Neben der Strangüberwachungseinheit PCU kann zudem eine Zusatzmeldeeinheit 5 vorhanden sein (nicht dargestellt). Die Rackentladungseinheit RE ist mit einer weiteren Racküberwachungseinheit MCUn als zweite Racküberwachungseinheit MCUn des Racks 2 verbunden.

Weiterhin ist in Figur 3 als schematische Darstellung des erfindungsgemäßen Überwachungssystems für Energiespeicher ein Rack 2 mit Energiespeichermodulen 1, Modulüberwachungseinheiten MMU sowie einer Rackentladungseinheit RE und mit einem NetzteilNT dargestellt, wobei das Netzteil NT parallel zum Spannungsabgriff über alle Energiespeichermodule 1 im Rack 2 als Energieversorgung für die Modulüberwachungseinheiten MMU mit der jeweiligen Modulüberwachungseinheiten MMU eines jeden Energiespeichermoduls 1 spannungsführend verbunden ist.

Zudem sind die Modulüberwachungseinheiten MMU miteinander verbunden (nicht dargestellt) und mit einer Racküberwachungseinheit MCU als erste Racküberwachungseinheit MCU, und die Rackentladungseinheit RE mit der Racküberwachungseinheit MCUn als zweite Racküberwachungseinheit MCUn verbunden.

Die jeweiligen Modulüberwachungseinheiten MMU eines Racks 2 können über einen Datenbus miteinander vernetzt sein, wobei die Modulüberwachungseinheiten MMU über den Datenbus mit der Racküberwachungseinheit MCU verbunden sind.

### Zusammenstellung der Bezugszeichen

- 1 -: Energiespeichermodul
- 2, 2n -: Rack, zweites Rack, weiteres Rack
- 3 -: Strang
- 4 -: Energiespeichermodulgruppe
- 5 -: Zusatzmeldeeinheit
- 6 -: Überladungsschutzschaltung, Spannungsüberwachung, Drosselwandlerschaltung
- 7 -: Diode
- 8 -: elektronischen Schalter, Transistor

- MCU, MCUn -: Racküberwachungseinheit, zweite Racküberwachungseinheit, weitere Racküberwachungseinheit
- ME -: Modulentladungseinheit
- MMU.. -: Modulüberwachungseinheit
- NT -: Netzteil, Netzteilkomponente
- PCU -: Strangüberwachungseinheit
- RE -: Rackentladungseinheit
- TM -: Rackmanager
- CCU -: Zentralüberwachungseinheit

## Patentansprüche

1. Überwachungssystem eines Energiespeichers, wobei der Energiespeicher zumindest ein Energiespeichermodul (1) mit in Serie geschalteten Energiespeicherzellen umfasst, wobei das zumindest eine Energiespeichermodul (1) eine Modulüberwachungseinheit (MMU) umfasst und das zumindest eine Energiespeichermodule (1) in einem Rack (2,...,2n) anordbar ist oder das ein, zwei oder mehr Energiespeichermodule (1) zumindest ein Rack (2,...,2n) bilden, wobei zumindest zwei oder mehr der Energiespeichermodule (1) in einem oder als Rack (2,... ,2n) in Serie geschalten sind und wobei das zumindest eine Rack (2,... ,2n) eine Racküberwachungseinheit (MCU) umfasst und die Modulüberwachungseinheit (MMU) des jeweiligen Energiespeichermoduls (1) mit der Racküberwachungseinheit (MCU) des zumindest einen Racks (2,...,2n) verbunden ist und die Racküberwachungseinheit (MCU) mit einer Strangüberwachungseinheit (PCU) verbindbar oder verbunden ist und die Strangüberwachungseinheit (PCU) mit der Zentralüberwachungseinheit (CCU) verbunden ist oder dass die Racküberwachungseinheit (MCU) direkt mit einer Zentralüberwachungseinheit (CCU) verbindbar oder verbunden ist,
**dadurch gekennzeichnet,**
**dass** jeweils eines der Energiespeichermodule (1) eine Modulentladungseinheit (ME) oder eine Vielzahl von Energiespeichermodulen (1) gemeinsam eine Modulentladungseinheit (ME) oder die Energiespeichermodule (1) eines Racks (2,...,2n) gemeinsam eine Modulentladungseinheit (ME) als Rackentladungseinheit (RE) aufweist, wobei die jeweilige Modulentladungseinheit (ME) oder die Rackentladungseinheit (RE) mit der Racküberwachungseinheit (MCU) des Racks (2,... ,2n) oder einer weiteren Racküberwachungseinheit (MCUn) verbunden ist.

2. Überwachungssystem nach Anspruch 1,
**dadurch gekennzeichnet,**
**dass** bei zwei oder mehr Modulentladungseinheiten (ME) innerhalb des Racks (2,...,2n) die jeweiligen Modulentladungseinheiten (ME) miteinander in Verbindung stehen.

3. Überwachungssystem nach Anspruch 1 und 2,
**dadurch gekennzeichnet,**
**dass** in der Verbindung zwischen den oder mit den jeweiligen Modulentladungseinheiten (ME) innerhalb des Racks (2,...,2n) ein Rackmanager (TM) vorgesehen oder verbunden ist, wobei die Modulentladungseinheiten (ME) über den Rackmanager (TM) mit der jeweiligen Racküberwachungseinheit (MCU, MCUn) verbunden sind.

4. Überwachungssystem nach einem der vorhergehenden Ansprüche,
**dadurch gekennzeichnet,**
**dass** die weitere Racküberwachungseinheit (MCU, MCUn) eine oder die Racküberwachungseinheit (MCU, MCUn) des gleichen Racks (2) oder eines zweiten oder weiteren Racks (2n) ist.

5. Überwachungssystem nach einem der vorhergehenden Ansprüche,
**dadurch gekennzeichnet,**
**dass** die Racküberwachungseinheit (MCU) und die Racküberwachungseinheit (MCUn) eines Racks (2,...,2n) in Verbindung stehen.

6. Überwachungssystem nach einem der vorhergehenden Ansprüche,
**dadurch gekennzeichnet,**
**dass** bei zwei oder mehr in Serie geschaltenen oder kombinierten Racks (2,...,2n) die Racküberwachungseinheit (MCU, MCUn) eines Racks (2,... ,2n) mit der Racküberwachungseinheit (MCU, MCUn) des zweiten oder weiteren Racks (2,...,2n) in Verbindung stehen.

7. Überwachungssystem nach einem der vorhergehenden Ansprüche,
**dadurch gekennzeichnet,**
**dass** die Modulentladungseinheit (ME) parallel zu einem Spannungsabgriff des jeweiligen Energiespeichermoduls (1) oder parallel zu einem Spannungsabgriff über die Vielzahl von Energiespeichermodulen (1) geschaltet ist oder dass die Rackentladungseinheit (RE) parallel zum gemeinsamen Spannungsabgriff aller Energiespeichermodule (1) eines Racks (2,...,2n) geschaltet ist.

8. Überwachungssystem nach einem der vorhergehenden Ansprüche,
**dadurch gekennzeichnet,**
**dass** das der jeweiligen Modulüberwachungseinheit (MMU) zugeordnete Energiespeichermodul (1) parallel zu einem Spannungsabgriff am oder innerhalb des Energiespeichermoduls (1) als Netzteil (NT) oder eine Netzteilkomponente (NT) dieser jeweiligen Modulüberwachungseinheit (MMU) zugeordnet ist
oder
**dass** den jeweiligen Modulüberwachungseinheiten (MMU) der Vielzahl von Energiespeichermodulen (1) ein parallel zu einem Spannungsabgriff der Vielzahl der Energiespeichermodule (1) geschaltetes gemeinsames Netzteil (NT) oder eine gemeinsame Netzteilkomponente (NT) zugeordnet ist
oder
den jeweiligen Modulüberwachungseinheiten (MMU) aller Energiespeichermodulen (1) des Racks (2,...,2n) ein parallel zu einem Spannungsabgriff aller Energiespeichermodule (1) des Racks (2,...,2n) geschaltetes gemeinsames Netzteil (NT) oder eine gemeinsame Netzteilkomponente (NT) zugeordnet ist.

9. Überwachungssystem nach einem der vorhergehenden Ansprüche,
**dadurch gekennzeichnet,**
**dass** zumindest eines der Energiespeichermodule (1) in einem Rack (2,...,2n) eine Energiespeichermodulgruppe (4) bildet oder dass zwei oder mehr Energiespeichermodule (1) in einem Rack (2,... ,2n) in eine, zwei oder mehr Energiespeichermodulgruppen (4) je Rack (2,... ,2n) aufteilbar oder zuordbar sind.
